# FASCICULE DE BREVET EUROPEEN

(11) **EP 2 501 476 B1**
(45) Date de publication et mention de la délivrance du brevet: **06.06.2018**
(21) Numéro de dépôt: 10801596.7
(22) Date de dépôt: 19.11.2010
(51) Int. Cl.: B02C 9/04, B02C 4/06

(54) **PROCÉDÉ ET APPAREIL DE FABRICATION SIMPLIFIÉE, D'UNE MOUTURE DE BLÉS DE RÉFÉRENCE**
VERFAHREN UND VORRICHTUNG FÜR EINE VEREINFACHTE HERSTELLUNG VON REFERENZ WEIZEN MEHL
METHOD ET DEVICE FOR A SIMPLIFIED PRODUCTION OF A REFERENCE MILLED WHEAT

(30) Priorité: 20.11.2009 FR 0905572
(43) Date de publication de la demande: 26.09.2012
(73) Titulaire: Chopin Technologies, 92396 Villeneuve La Garenne Cedex (FR); Institut National De La Recherche Agronomique, 75338 Paris Cedex 07 (FR); Arvalis Institut du végétal, 75116 Paris (FR)
(72) Inventeur: DUBAT, Arnaud, 78130 Fourqueux (FR); GEOFFROY, Sonia, 77170 Brie Comte Robert (FR); ABECASSIS, Joël, 34920 Le Cres (FR); CHAURAND, Marc, 34980 Montferrier-sur-Lez (FR); PUJOL, Robert, 34820 Teyran (FR); BAR-L'HELGOUAC'H, Christine, 75014 Paris (FR)
(74) Mandataire: Derambure, Christian
(86) Numéro de dépôt international: PCT/FR2010/000773
(87) Numéro de publication internationale: WO 2011/061420

(56) Documents cités:
- EP-A1- 0 433 498
- EP-A2- 0 339 577
- CH-A- 528 302
- US-A- 4 133 899
- US-A- 4 986 997

## Description

L'invention concerne un procédé de fabrication simplifiée d'une mouture de référence en vue de déterminer la valeur meunière des blés.
L'invention concerne aussi un appareil pour la mise en oeuvre du procédé.

Le document US 4 986 997 décrit un procédé séquentiel pour le traitement du blé comme appoint à la mouture classique qui autorise la récupération de quantités substantielles d'embryon et de scutellum de blé, afin d'augmenter ainsi le rendement de germe de première qualité tout en renforçant l'aptitude au stockage de la farine obtenue du fait de la suppression des fractions de l'huile de germe. Le procédé implique le tempérage initial du blé, suivi d'un dégraissage par percussion destiné à retirer intact l'embryon ; ensuite, le blé débarrassé de son embryon est soumis à une seconde étape de tempérage précédant la mouture. Le système de broyage du moulin est modifié de manière appropriée grâce à une sélection judicieuse de l'intervalle de broyage de manière à permettre la récupération du scutellum intact, en particulier dans le blé dur rouge d'hiver.

Le document CH528302 décrit un broyeur à grain de laboratoire qui comprend des passages de grains et d'éléments broyés raccordés par des conduites avec, en dessous de ceux-ci, des séparateurs installés pour trier des produits broyés en fractions et des conteneurs collectant la farine, ainsi que des conduites pour évacuer le son des conteneurs, se caractérisant par le fait que les tuyaux d'évacuation sont raccordés aux mêmes passages de grains et d'éléments broyés pour l'évacuation du son au moyen de tuyaux de dérivation supplémentaires dotés de clapets de séparation pour répartir le flux produits broyés, auquel cas les conteneurs collectant la farine sont disposés sur une balance dotée d'un capteur qui réagit lorsque le degré de broyage par poids prescrit est atteint et qui envoie une commande pour arrêter l'entraînement du broyeur.

Le document US 4 133 899 décrit un procédé de broyage de blé destiné à produire une grande proportion de farine grossière dans lequel le blé ayant subi un double tempérage passe à travers une série de quatre jeux identiques de cylindres de broyage grossièrement et profondément rainurés à fonctionnement brusque. Le produit en sortie de chaque cylindre est séparé en gamme de tailles. Les particules sensiblement trop grosses provenant de chaque jeu de cylindres de broyage sont dirigées vers le jeu suivant de cylindres de broyage de la série. Les particules légèrement trop grosses sont dirigées vers des cylindres rainurés pour réduire légèrement leur taille et pour retirer l'enveloppe de son. Les particules ayant la bonne taille sont purifiées à l'air afin de retirer les particules de son et les particules de son trop grosses subissent des opérations supplémentaires de concassage destinées à séparer toute particule d'endosperme de celles-ci.

Le document EP0433498 concerne un appareil de broyage de matériau granulaire en particules broyées qui comprend une paire de rouleaux montés rotatifs et disposés en regard l'un de l'autre. Au moins un des rouleaux est mobile vers l'autre. Une unité de réglage d'écartement est associée à au moins un rouleau et destinée à le déplacer vers ou à l'opposé de l'autre rouleau pour régler l'écartement entre eux de manière à ajuster le degré de broyage des particules broyées. Une unité de mesure est disposée en aval du broyeur à rouleaux et est relié à l'unité de réglage d'écartement pour mesurer le degré de broyage des particules broyées. L'unité de réglage d'écartement est opérationnelle en réponse à un signal de sortie provenant de l'unité de mesure.

Le document EP 0339 577 concerne un procédé de mouture de grains comprenant les étapes de polissage des grains, de broyage et criblage répétés de manière alternée des grains polis, de récupération de la mouture, et une étape d'humidification des grains broyés lors de l'étape de broyage et de criblage.

Pour obtenir une mouture industrielle de blés, on effectue de nombreuses opérations, notamment de broyage et de tamisage sur de grandes quantités.

En vue de vouloir prédire la valeur meunière du blé et en particulier son rendement en mouture à partir de la mouture d'une quantité réduite de grains, on a cherché à limiter et à simplifier au mieux les opérations nécessaires de manière à permettre une telle prédiction avec un matériel simplifié du type laboratoire. Toutefois, la farine obtenue doit bien sûr avoir des caractéristiques comparables à celles d'une farine obtenue dans un moulin industriel.

Après de nombreuses études et essais, les inventeurs sont parvenus à mettre au point un procédé de fabrication simplifiée d'une telle mouture qui est notamment remarquable en ce qu'il consiste à effectuer :
- un premier broyage d'un échantillon de blés ;
- un premier tamisage du produit ainsi broyé selon trois niveaux de granulométrie distincts, générant quatre produits dénommés ci-après selon une granulométrie décroissante refus, grosses semoules, fines semoules et farine de premier broyage ;
- un second broyage du refus provenant du premier broyage ;
- un second tamisage du refus ainsi broyé, semblable au premier tamisage, générant quatre produits triés dénommés ci-après selon une granulométrie décroissante : gros sons, grosses semoules, fines semoules et farine de second broyage ;
- un mélange des grosses semoules provenant des tamisages qui suivent respectivement les premier et second broyages ;
- un troisième broyage du mélange des grosses semoules précédemment obtenu ;
- un troisième tamisage du mélange des grosses semoules ainsi broyées selon deux niveaux de granulométrie distincts, générant trois produits triés dénommés ci-après selon une granulométrie décroissante : fins sons, fines semoules et farine de troisième broyage ;
- un mélange des fines semoules provenant de chacun des trois tamisages qui suivent les trois broyages précités ;
- un quatrième broyage du mélange des fines semoules précédemment obtenu ;
- un quatrième tamisage du mélange des fines semoules ainsi broyées selon un seul niveau de granulométrie générant deux produits triés dénommés ci-après selon une granulométrie décroissante : remoulages et farine de quatrième broyage ;
- un mélange des farines provenant des tamisages qui suivent les quatre broyages, ledit mélange constituant la mouture recherchée.

De préférence, on effectue un cinquième broyage des remoulages provenant du tamisage qui suit le quatrième broyage et un cinquième tamisage des remoulages ainsi broyés selon un seul niveau de granulométrie générant deux produits triés dénommés ci-après selon une granulométrie décroissante : remoulages bis et farine de cinquième broyage, cette farine venant s'ajouter au mélange des autres farines pour constituer la mouture recherchée.

Selon un mode de réalisation, le second tamisage qui suit le second broyage est effectué au moyen du même système de tamisage que celui utilisé pour le premier tamisage qui suit le premier broyage et avantageusement, le cinquième broyage et le cinquième tamisage sont obtenus par une répétition du quatrième broyage et respectivement du quatrième tamisage, la farine de cinquième broyage venant s'ajouter à la farine de quatrième broyage.

Selon un mode de réalisation, les trois niveaux de granulométrie des tamisages qui suivent les premier et second broyages sont respectivement d'environ 200, 500 et 1000 microns, les deux niveaux de granulométrie du tamisage qui suit le troisième broyage sont respectivement d'environ de 200 et 500 microns et la granulométrie des tamisages qui suivent les quatrième et cinquième broyage sont d'environ 160 microns.

De préférence, les vitesses d'alimentation pour les broyages sont comprises respectivement entre 3 g/s et 8 g/s pour les deux premiers et entre 1 g/s et 4 g/s pour les suivants.

Les premier et second broyages sont, par exemple, effectués chacun au moyen de deux cylindres cannelés du type dos sur dos tandis que les troisième, quatrième et éventuellement cinquième broyage, généralement dénommés respectivement claquage et convertissages, sont effectués au moyen chacun de deux cylindres lisses.

Selon un mode de réalisation, les vitesses des cylindres rapides pour chaque broyage sont dans l'ordre des opérations d'environ 500 et 1000 tours/min pour respectivement les deux premiers broyages et 600 tours/min pour les suivants, les coefficients différentiels entre les vitesses des cylindres rapides et des cylindres lents pour chaque broyage sont dans l'ordre des opérations, d'environ 2,5 et 3,5 pour respectivement les deux premiers broyages et 1,5 pour les suivants, tandis que les écartements des cylindres pour chaque broyage sont dans l'ordre des opérations d'environ 0,70 mm et 0,10 mm pour respectivement les deux premiers broyages et 0,03 mm pour les suivants. L'invention concerne aussi un appareil pour la mise en oeuvre du procédé précité, qui est notamment remarquable en ce qu'il comporte quatre ou cinq broyeurs successifs suivis chacun d'un système de tamisage respectivement à uniquement trois niveaux de granulométrie pour les deux premiers broyeurs, uniquement deux niveaux pour le troisième broyeur et un seul niveau pour les broyeurs suivants.

Selon un mode de réalisation, le système de tamisage du premier et du second broyeur est commun. Par exemple et avantageusement, l'appareil ne comporte que quatre broyeurs suivis chacun d'un système de tamisage et dont certains peuvent être communs, le quatrième broyeur et le quatrième système de tamisage étant aménagés pour assurer le rôle d'un cinquième broyeur et respectivement d'un cinquième système de tamisage.

Enfin et de préférence, les broyeurs sont pourvus chacun de deux cylindres, tandis que les cylindres des deux premiers broyeurs sont cannelés et du type dos sur dos et ceux des deux ou trois autres broyeurs sont lisses.

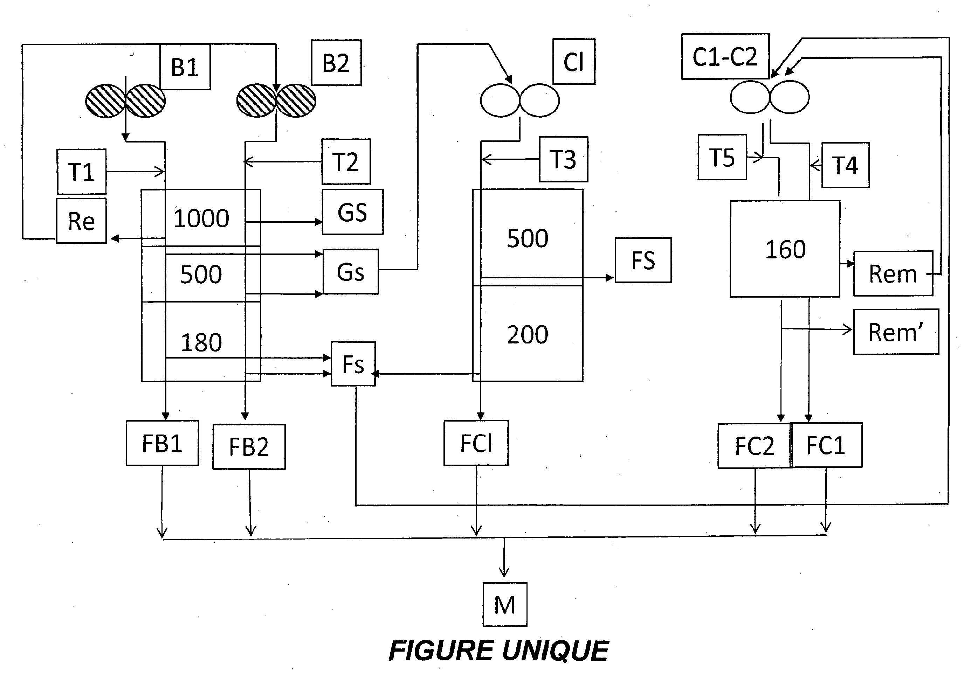

L'invention sera bien comprise à la lecture de la description qui va suivre et qui se réfère au schéma annexé (figure unique).

On a représenté schématiquement un procédé et en même temps un appareil selon l'invention.

Le procédé et l'appareil décrits ci-après sont donnés à titre d'exemple d'un mode de réalisation. En conséquence, les valeurs indiquées ne doivent donc pas être considérées comme limitatives de l'invention, même si elles paraissent préférables.

Pour obtenir la mouture de référence recherchée, on procède tout d'abord à un premier broyage B1 d'un échantillon de blés au moyen d'un broyeur et le produit ainsi broyé est ensuite tamisé comme représenté sur le schéma, selon un premier tamisage T1 qui, comme le montre le schéma, est effectué selon trois niveaux de granulométrie, en particulier ici respectivement de 200, 500 et 1000 microns.

De préférence, le broyeur pour le premier broyage B1, comme tous les autres broyeurs dont il sera question ci-après, comporte deux cylindres.

Le tamisage T1, comme les autres tamisages dont il sera question ci-après, est avantageusement obtenu au moyen de systèmes comportant des empilements de tamis et utilisant la centrifugation.

Du fait du tamisage T1 à trois niveaux, on obtient quatre produits triés dénommés ci-après refus Re ayant une granulométrie supérieure à 1000 microns, grosses semoules Gs ayant une granulométrie inférieure à 1000 microns et supérieure à 500 microns, fines semoules Fs ayant une granulométrie comprise entre 200 microns et 500 microns et farine FB1 de premier broyage ayant une granulométrie inférieure à 200 microns.

Le refus Re subit ensuite un second broyage B2 et il est de nouveau tamisé par un tamisage T2 qui reprend exactement les mêmes niveaux de granulométrie que le premier tamisage T1 de 1000 microns, 500 microns et 200 microns pour obtenir de même quatre produits triés dénommés ci-après respectivement et selon un ordre de granulométrie décroissante : gros sons GS, grosses semoules Gs, fines semoules Fs et farine FB2 de second broyage, cette dernière ayant donc une granulométrie inférieure à 200 microns.

Comme le montre encore le schéma, le deuxième tamisage T2 est réalisé avec le même système que celui utilisé pour le premier tamisage T1, mais il pourrait bien entendu être totalement distinct.

Suite aux tamisages T1 et T2, on mélange les grosses semoules Gs et les fines semoules Fs provenant de chacun desdits tamisages.

Les grosses semoules Gs ainsi récupérées subissent un troisième broyage CI, dénommé généralement claquage, et les produits ainsi broyés subissent un troisième tamisage T3 selon deux niveaux de granulométrie, ici de 500 microns et 200 microns, procurant trois produits triés respectivement dénommés : fins sons ayant une granulométrie supérieure à 500 microns, fines semoules d'une granulométrie comprise entre 200 microns et 500 microns et une farine FCI de troisième broyage de granulométrie inférieure à 200 microns.

On mélange ensuite les fines semoules Fs provenant de ce troisième tamisage T3 avec celles obtenues avec les deux autres tamisages T1 et T2 précédents, pour leur faire subir un quatrième broyage C1, généralement dénommé convertissage.

Les fines semoules Fs ainsi broyées au cours du quatrième broyage C1 subissent un tamisage T4 selon un seul niveau de granulométrie de 160 microns produisant deux produits triés dénommés ci-après remoulages Rem d'une granulométrie supérieure à 160 microns et farine FC1 de quatrième broyage d'une granulométrie inférieure à 160 microns.

Dans le schéma représenté, les remoulages Rem subissent un cinquième broyage C2 au moyen ici du même broyeur que précédemment tandis que les remoulages Rem ainsi broyés subissent un cinquième tamisage T5 au moyen du même système de tamisage que le précédent.

De la sorte, on obtient deux produits triés, à savoir des remoulages bis Rem' d'une granulométrie supérieure à 160 microns et une farine FC2 de cinquième broyage d'une granulométrie inférieure à 160 microns.

Toutefois pour le cinquième broyage C2 et le cinquième tamisage T5, il est bien sûr envisageable de les effectuer avec un broyeur et un système de tamisage distincts et différents de ceux utilisés pour le quatrième broyage C1 et le quatrième tamisage T4.

De même aussi, si le cinquième broyage C2 des remoulages Rem et cinquième tamisage T5 du produit ainsi broyé sont recommandés, on pourrait s'arrêter au quatrième broyage et quatrième tamisage.

Il suffit ensuite de mélanger les farines FB1, FB2, FCI, FC1 et FC2 provenant des cinq broyages et tamisages pour obtenir la mouture M recherchée.

Selon un mode de réalisation, les vitesses d'alimentation pour les broyages B1 et B2 sont par exemple comprises entre 3 g/s et 8 g/s et elles sont respectivement comprises entre 1 g/s et 4 g/s pour les broyages CI, C1 et C2.

Si pour les broyages B1, B2, CI, (C1, C2) on utilise des broyeurs comportant avantageusement deux cylindres, comme déjà dit, les cylindres pour les broyages B1, B2 sont avantageusement cannelés et dos sur dos tandis que les cylindres pour les autres broyages CI, C1, C2 sont de préférence lisses.

En outre, les vitesses des cylindres rapides pour chaque broyage sont respectivement de 500 tours/min pour le broyage B1, 1000 tours/min pour le broyage B2 et 600 tours/min pour les broyages CI, (C1, C2).

Les coefficients différentiels entre les vitesses des cylindres rapides et des cylindres lents pour chaque broyage sont respectivement d'environ 2,5 pour le broyage B1, 3,5 pour le broyage B2 et 1,5 pour les broyages CI, (C1, C2).

Enfin, les écartements des cylindres pour chaque broyage sont, par exemple, respectivement de 0,70 mm pour le broyage B1, 0,10 mm pour le broyage B2 et 0,03 mm pour les broyages CI, (C1, C2).

L'appareil selon l'invention pour la mise en oeuvre du procédé a été explicitement décrit en même temps que le procédé et comporte quatre ou cinq broyeurs et trois, quatre ou cinq systèmes de tamisage (certains broyeurs et/ou systèmes de tamisage pouvant être communs comme précisé ci-avant).

Si l'on veut représenter les divers moyens utilisés, il suffit d'attribuer les références désignant les broyages B1, B2, CI, C1-C2 et les tamisages T1-T5 du procédé respectivement à des broyeurs et des systèmes de tamisage de l'appareil.

## Revendications

1. Procédé de fabrication simplifiée d'une mouture de référence en vue de déterminer la valeur meunière des blés, **caractérisé en ce qu'**il consiste à effectuer :
- un premier broyage (B1) d'un échantillon de blés ;
- un premier tamisage (T1) du produit ainsi broyé selon trois niveaux de granulométrie distincts, générant quatre produits dénommés ci-après selon une granulométrie décroissante refus (Re), grosses semoules (Gs), fines semoules (Fs) et farine (FB1) de premier broyage (B1) ;
- un second broyage (B2) du refus (Re) provenant du premier broyage (B1) ;
- un second tamisage (T2) du refus (Re) ainsi broyé, semblable au premier tamisage (T1), générant quatre produits triés dénommés ci-après selon une granulométrie décroissante : gros sons (GS), grosses semoules (Gs), fines semoules (Fs) et farine (FB2) de second broyage (B2) ;
- un mélange des grosses semoules (Gs) provenant des tamisages (T1, 12) qui suivent respectivement les premier et second broyages (B1 et B2) ;
- un troisième broyage (CI) du mélange des grosses semoules (Gs) précédemment obtenu ;
- un troisième tamisage (T3) du mélange des grosses semoules (Gs) ainsi broyées selon deux niveaux de granulométrie distincts, générant trois produits triés dénommés ci-après selon une granulométrie décroissante : fins sons (FS), fines semoules (Fs) et farine (FCI) de troisième broyage ;
- un mélange des fines semoules (Fs) provenant de chacun des trois tamisages (T1, T2, T3) qui suivent les trois broyages (B1, B2, CI) précités ;
- un quatrième broyage (C1) du mélange des fines semoules (Fs) précédemment obtenu ;
- un quatrième tamisage (T4) du mélange des fines semoules (Fs) ainsi broyées selon un seul niveau de granulométrie générant deux produits triés dénommés ci-après selon une granulométrie décroissante : remoulages (Rem) et farine (FC1) de quatrième broyage ;
- un mélange des farines (FB1, FB2, FCI et FC1) provenant des tamisages (T1, T2, T3, T4) qui suivent les quatre broyages (B1, B2, CI, C1), ledit mélange constituant la mouture (M) recherchée.

2. Procédé selon la revendication 1, **caractérisé en ce qu'**il consiste en outre à effectuer un cinquième broyage (C2) des remoulages (Rem), provenant du tamisage (T4) qui suit le quatrième broyage (C1) et un cinquième tamisage (T5) des remoulages ainsi broyés selon un seul niveau de granulométrie générant deux produits triés dénommés ci-après selon une granulométrie décroissante : remoulages bis (Rem') et farine (FC2) de cinquième broyage, cette farine (FC2) venant s'ajouter au mélange des autres farines (FB1 , FB2, FCI et FC1) pour constituer la mouture (M) recherchée.

3. Procédé selon l'une des revendications 1 ou 2, **caractérisé en ce que** le second tamisage (T2) qui suit le second broyage (B2) est effectué au moyen du même système de tamisage que celui utilisé pour le premier tamisage (T1) qui suit le premier broyage (B1).

4. Procédé selon l'une des revendications 2 et 3, **caractérisé en ce que** le cinquième broyage (C2) et le cinquième tamisage (T5) sont obtenus par une répétition du quatrième broyage (C1) et respectivement du quatrième tamisage (T4), la farine (FC2) de cinquième broyage (C2) venant s'ajouter à la farine (FC1) de quatrième broyage (C1).

5. Procédé selon l'une des revendications 1 à 4, **caractérisé en ce que** les trois niveaux de granulométrie des tamisages (T1. T2) qui suivent les premier et second broyages (B1, B2) sont respectivement d'environ 200, 500 et 1000 microns.

6. Procédé selon l'une des revendications 1 à 5, **caractérisé en ce que** les deux niveaux de granulométrie du tamisage (T3) qui suit le troisième broyage (CI) sont respectivement d'environ de 200 et 500 microns.

7. Procédé selon l'une des revendications 1 à 6, **caractérisé en ce que** la granulométrie des tamisages (T4, T5) qui suivent les quatrième et cinquième broyage (C1, C2) sont d'environ 160 microns.

8. Procédé selon l'une des revendications 1 à 7, **caractérisé en ce que** les vitesses d'alimentation pour les broyages sont comprises respectivement entre 3 g/s et 8 g/s pour les deux premiers (B1, B2) et entre 1 g/s et 4 g/s pour les suivants (CI, C1, C2).

9. Procédé selon l'une des revendications 1 à 8, **caractérisé en ce que** les premier et second broyages (B1 et B2) sont effectués chacun au moyen de deux cylindres cannelés du type dos sur dos tandis que les troisième, quatrième et éventuellement cinquième broyage (CI, C1. C2), généralement dénommés respectivement claquage et convertissages, sont effectués au moyen chacun de deux cylindres lisses.

10. Procédé selon la revendication 9, **caractérisé en ce que** les vitesses des cylindres rapides pour chaque broyage sont dans l'ordre des opérations d'environ 500 et 1000 tours/min pour respectivement les deux premiers broyages (B1, B2) et 600 tours/min pour les suivants (CI, C1, C2).

11. Procédé selon l'une des revendications 9 et 10, **caractérisé en ce que** les coefficients différentiels entre les vitesses des cylindres rapides et des cylindres lents pour chaque broyage sont dans l'ordre des opérations, d'environ 2,5 et 3,5 pour respectivement les deux premiers broyages (B1. B2) et 1,5 pour les suivants (CI, C1. C2).

12. Procédé selon l'une des revendications 9 à 11, **caractérisé en ce que** les écartements des cylindres pour chaque broyage sont dans l'ordre des opérations d'environ 0,70 mm et 0,10 mm pour respectivement les deux premiers broyages (B1, B2) et 0,03 mm pour les suivants (CI, C1, C2).

13. Appareil pour la mise en oeuvre du procédé selon l'une des revendications 1 à 12, **caractérisé en ce qu'**il comporte quatre ou cinq broyeurs (B1 , B2, CI, C1, C2) successifs suivis chacun d'un système de tamisage (T1 à T5) respectivement à uniquement trois niveaux de granulométrie pour les deux premiers broyeurs (B1 , B2), uniquement deux niveaux pour le troisième broyeur (CI) et un seul niveau pour le ou les broyeurs suivants (C1, C2).

14. Appareil selon la revendication 13 **caractérisé en ce que** le système de tamisage (T1, T2) du premier (B1) et du second broyeur (B2) est commun.

15. Appareil selon l'une des revendications 13 et 14, **caractérisé en ce qu'**il ne comporte que quatre broyeurs (B1, B2, CI, C1 -C2) suivis chacun d'un système de tamisage (TI à T5) et dont certains peuvent être communs, le quatrième broyeur (C1) et le quatrième système de tamisage (T4) étant aménagés pour assurer le rôle d'un cinquième broyeur (C2) et respectivement d'un cinquième système de tamisage (T5).

16. Appareil selon l'une des revendications 13 à 15, **caractérisé en ce que** les broyeurs (B1, B2, CI, C1, C2) sont pourvus chacun de deux cylindres, tandis que les cylindres des deux premiers broyeurs (B1, B2) sont cannelés et du type dos sur dos et ceux des deux ou trois autres broyeurs (CI, C1, C2) sont lisses.

## Patentansprüche

1. Verfahren zur vereinfachten Herstellung von Referenzmehl in Hinblick auf eine Bestimmung des Müllerwerts des Weizens, **dadurch gekennzeichnet, dass** es die Durchführung der folgenden Schritte aufweist:
- eine erste Mahlung (B1) einer Weizenprobe;
- eine erste Siebung (T1) des derart gemahlenen Produkts gemäß dreier unterschiedlicher Granulometriestufen, die vier Produkte erzeugt, die nachstehend nach abnehmender Granulometrie aufgeführt sind: Rückstand (Re), grobe Grieße (Gs), feine Grieße (Fs) und Mehl (FB1) erster Mahlung (B1);
- eine zweite Mahlung (B2) des aus der ersten Mahlung (B1) stammenden Rückstands (Re);
- eine der ersten Siebung (T1) ähnliche zweite Siebung (T2) des derart gemahlenen Rückstands (Re), die vier sortierte Produkte erzeugt, die nachstehend nach abnehmender Granulometrie aufgeführt sind: grobe Kleie (GS), grobe Grieße (Gs), feine Grieße (Fs) und Mehl (FB2) zweiter Mahlung (B2);
- eine Mischung der groben Grieße (Gs), die aus den Siebungen (T1, T2) stammen, die auf die erste bzw. zweite Mahlung (B1 und B2) folgen;
- eine dritte Mahlung (CI) der vorstehend gewonnenen Mischung grober Grieße (Gs);
- eine dritte Siebung (T3) der Mischung der derart gemahlenen groben Grieße (Gs) gemäß zweier unterschiedlicher Granulometriestufen, die drei sortierte Produkte erzeugt, die nachstehend nach abnehmender Granulometrie aufgeführt sind: feine Kleien (FS), feine Grieße (Fs) und Mehl (FCI) dritter Mahlung;
- eine Mischung der feinen Grieße (Fs), die aus jeder der drei Siebungen (T1, T2, T3) stammen, die auf die oben erwähnten drei Mahlungen (B1, B2, CI) folgen;
- eine vierte Mahlung (C1) der vorstehend gewonnenen Mischung feiner Grieße (Fs);
- eine vierte Siebung (T4) der Mischung der derart gemahlenen feinen Grieße (Fs) gemäß einer einzigen Granulometriestufe, die zwei sortierte Produkte erzeugt, die nachstehend nach abnehmender Granulometrie aufgeführt sind: Nachmehle (Rem) und Mehl (FC1) vierter Mahlung;
- eine Mischung der Mehle (FB1, FB2, FCI und FC1), die aus den Siebungen (T1, T2, T3, T4) stammen, die auf die vier Mahlungen (B1, B2, CI, C1) folgen, wobei die Mischung das gesuchte Mehl (M) bildet.

2. Verfahren nach Anspruch 1, **dadurch gekennzeichnet, dass** es ferner die Durchführung
einer fünften Mahlung (C2) der Nachmehle (Rem) aufweist, die aus der Siebung (T4) stammen, die auf die vierte Mahlung (C1) folgt, und
einer fünften Siebung (T5) der derart gemahlenen Nachmehle gemäß einer einzigen Granulometriestufe, die zwei sortierte Produkte erzeugt, die nachstehend nach abnehmender Granulometrie aufgeführt sind: Nachmehle (Rem*ʹ*) und Mehl (FC2) fünfter Mahlung, wobei dieses Mehl (FC2) der Mischung der anderen Mehle (FB1, FB2, FCI und FC1) hinzugefügt wird, um das gesuchte Mehl (M) zu bilden.

3. Verfahren nach einem der Ansprüche 1 oder 2, **dadurch gekennzeichnet, dass** die zweite Siebung (T2), die auf die zweite Mahlung (B2) folgt, mit Hilfe des gleichen Siebungssystems durchgeführt wird, wie für die erste Siebung (T1) verwendet wird, die auf die erste Mahlung (B1) folgt.

4. Verfahren nach einem der Ansprüche 2 und 3, **dadurch gekennzeichnet, dass** die fünfte Mahlung (C2) und die fünfte Siebung (T5) durch eine Wiederholung der vierten Mahlung (C1) bzw. der vierten Siebung (T4) erzielt werden, wobei das Mehl (FC2) fünfter Mahlung (C2) dem Mehl (FC1) vierter Mahlung (C1) hinzugefügt wird.

5. Verfahren nach einem der Ansprüche 1 bis 4, **dadurch gekennzeichnet, dass** die drei Granulometriestufen der Siebungen (T1, T2), die auf die erste und zweite Mahlung (B1, B2) folgen, jeweils ungefähr 200, 500 und 1000 Mikrometer sind.

6. Verfahren nach einem der Ansprüche 1 bis 5, **dadurch gekennzeichnet, dass** die zwei Granulometriestufen der Siebung (T3), die auf die dritte Mahlung (CI) folgt, jeweils ungefähr 200 und 500 Mikrometer sind.

7. Verfahren nach einem der Ansprüche 1 bis 6, **dadurch gekennzeichnet, dass** die Granulometriestufe der Siebungen (T4, T5), die auf die vierte und fünfte Mahlung (C1, C2) folgen, ungefähr 160 Mikrometer ist.

8. Verfahren nach einem der Ansprüche 1 bis 7, **dadurch gekennzeichnet, dass** die Geschwindigkeiten der Zufuhr für die Mahlungen im Bereich zwischen 3g/s und 8g/s für die zwei ersten (B1, B2) bzw. zwischen 1g/s und 4g/s für die folgenden (CI, C1, C2) liegen.

9. Verfahren nach einem der Ansprüche 1 bis 8, **dadurch gekennzeichnet, dass** die erste und zweite Mahlung (B1 und B2) jeweils mit Hilfe von zwei geriffelten Walzen des Typs Rücken-an-Rücken durchgeführt werden, während die dritte, vierte und gegebenenfalls fünfte Mahlung (CI, C1, C2), allgemein Durchschlag bzw. Ausmahlungen genannt, mit Hilfe jeweils von zwei glatten Walzen durchgeführt werden.

10. Verfahren nach Anspruch 9, **dadurch gekennzeichnet, dass** die Geschwindigkeiten der schnellen Walzen für jede Mahlung in der Reihenfolge der Arbeitsgänge ungefähr 500 und 1000 Umdrehungen/Minute für jeweils die zwei ersten Mahlungen (B1, B2) und 600 Umdrehungen/Minute für die folgenden (CI, C1, C2) sind.

11. Verfahren nach einem der Ansprüche 9 und 10, **dadurch gekennzeichnet, dass** die Differentialkoeffizienten zwischen den Geschwindigkeiten der schnellen Walzen und der langsamen Walzen für jede Mahlung in der Reihenfolge der Arbeitsgänge ungefähr 2,5 und 3,5 für jeweils die zwei ersten Mahlungen (B1, B2) und 1,5 für die folgenden (CI, C1, C2) sind.

12. Verfahren nach einem der Ansprüche 9 bis 11, **dadurch gekennzeichnet, dass** die Abstände der Walzen für jede Mahlung in der Reihenfolge der Arbeitsgänge ungefähr 0,70mm und 0,10mm für jeweils die zwei ersten Mahlungen (B1, B2) und 0,03mm für die folgenden (CI, C1, C2) sind.

13. Vorrichtung zur Durchführung des Verfahrens nach einem der Ansprüche 1 bis 12, **dadurch gekennzeichnet, dass** sie vier oder fünf aufeinander folgende Mühlen (B1, B2, CI, C1, C2) aufweist, jede gefolgt von einem Siebungssystem (T1 bis T5) mit nur drei Granulometriestufen für die zwei ersten Mühlen (B1, B2), nur zwei Stufen für die dritte Mühle (CI) bzw. einer einzigen Stufe für die folgende(n) Mühle(n) (C1, C2).

14. Vorrichtung nach Anspruch 13, **dadurch gekennzeichnet, dass** das Siebungssystem (T1, T2) der ersten (B1) und zweiten Mahlung (B2) ein gemeinsames ist.

15. Vorrichtung nach einem der Ansprüche 13 und 14, **dadurch gekennzeichnet, dass** sie nur vier Mühlen (B1, B2, CI, C1 -C2) aufweist, jede gefolgt von einem Siebungssystem (TI bis T5), von denen einige gemeinsame sein können, wobei die vierte Mühle (C1) und das vierte Siebungssystem (T4) konfiguriert sind, um die Funktion einer fünften Mühle (C2) bzw. eines fünften Siebungssystems (T5) bereitzustellen.

16. Vorrichtung nach einem der Ansprüche 13 bis 15, **dadurch gekennzeichnet, dass** die Mühlen (B1, B2, CI, C1, C2) jeweils mit zwei Walzen versehen sind, wobei die Walzen der zwei ersten Mühlen (B1, B2) geriffelt sind und vom Typ Rücken-an-Rücken sind und diejenigen der zwei oder drei anderen Mühlen (CI, C1, C2) glatt sind.

## Claims

1. Process of simplified production for a reference milling for the purpose of determining the milling quality of wheat, **characterized in that** it consists in performing:
- a first crushing (B1) of a wheat sample;
- a first sieving (T1) of the product thus crushed into three distinct levels of particle size, producing four products referred to below according to a decreasing particle size: oversize particles (Re), coarse semolina (Gs), fine semolina (Fs), and first-crushing (B1) flour (FB1);
- a second crushing (B2) of the oversize particles (Re) resulting from the first crushing (B1);
- a second sieving (T2) of the oversize particles (Re) thus crushed, similar to the first sieving (T1), producing four sorted products referred to below according to decreasing particle size : coarse bran (GS), coarse semolina (Gs), fine semolina (Fs) and second-crushing (B2) flour (FB2);
- a mixing of coarse semolina (Gs) resulting from sievings (T1, T2) that follow the first and second crushings (B1 and B2) respectively;
- a third crushing (CI) of the mixture of coarse semolina (Gs) previously obtained;
- a third sieving (T3) of the mixture of coarse semolina (Gs) thus crushed into two distinct levels of particle size, producing three sorted products referred to below according to decreasing particle size: fine bran (FS), fine semolina (Fs) and third-crushing flour (FCI);
- a mixing of fine semolina (Fs) resulting from each of the three sievings (T1, T2, T3) that follow the three above-mentioned crushings (B1, B2, CI);
- a fourth crushing (C1) of the mixture of fine semolina (Fs) previously obtained;
- a fourth sieving (T4) of the mixture of the fine semolina (Fs) thus crushed into a single level of particle size producing two sorted products referred to below according to a decreasing particle size: sharps (Rem) and fourth-crushing flour (FC1);
- a mixing of the flours (FB1, FB2, FCI and FC1) resulting from the sievings (T1, T2, T3, T4) that follow the four crushings (B1, B2, CI, C1), said mixture constituting the desired milling (M).

2. Process according to Claim 1, wherein it further consists in performing a fifth crushing (C2) of the sharps (Rem), resulting from the sieving (T4) that follows the fourth crushing (C1) and a fifth sieving (T5) of the sharps thus crushed into a single level of particle size producing two sorted products referred to below according to a decreasing particle size: sharps bis (Remʹ) and fifth-crushing flour (FC2), this flour (FC2) being added to the mixture of other flours (FB1, FB2, FCI and FC1) to constitute the desired milling (M).

3. Process according to one of Claims 1 or 2, wherein the second sieving (T2) that follows the second crushing (B2) is performed using the same sieving system as that used for the first sieving (T1) that follows the first crushing (B1).

4. Process according to one of Claims 2 and 3, wherein the fifth crushing (C2) and the fifth sieving (T5) are obtained by a repetition of the fourth crushing (C1) and of the fourth sieving (T4) respectively, the fifth-crushing (C2) flour (FC2) being added to the fourth-crushing (C1) flour (FC1).

5. Process according to one of Claims 1 to 4, wherein the three levels of particle size of the sievings (T1, T2) that follow the first and second crushings (B1, B2) are approximately 200, 500 and 1000 microns respectively.

6. Process according to one of Claims 1 to 5, wherein the two levels of particle size of the sieving (T3) that follows the third crushing (CI) are approximately 200 and 500 microns respectively.

7. Process according to one of Claims 1 to 6, wherein the particle size of the sievings (T4, T5) that follow the fourth and fifth crushings (C1, C2) are approximately 160 microns.

8. Process according to one of Claims 1 to 7, wherein the feed rates for the crushings are between 3 g/s and 8 g/s for the first two (B1, B2) respectively and between 1 g/s and 4 g/s for the subsequent ones (CI, C1, C2).

9. Process according to one of Claims 1 to 8, wherein the first and second crushings (B1 and B2) are each performed using two grooved rollers of the back-to-back type whereas the third, fourth, and optionally fifth crushings (CI, C1, C2), generally referred to as course and fine reduction respectively, are performed each using two smooth rollers.

10. Process according to Claim 9, wherein the speeds of the fast rollers for each crushing are, in the order of the operations, approximately 500 and 1000 rpm for the first two crushings (B1, B2) respectively and 600 rpm for the subsequent ones (CI, C1, C2).

11. Process according to one of Claims 9 and 10, wherein the differential coefficients between the speeds of the fast rollers and the slow rollers for each crushing are, in the order of the operations, approximately 2.5 and 3.5 for the first two crushings (B1, B2) respectively and 1.5 for the subsequent ones (CI, C1, C2).

12. Process according to one of Claims 9 to 11, wherein the roller gaps for each crushing are, in the order of the operations, approximately 0.70 mm and 0.10 mm for the first two crushings (B1, B2) respectively and 0.03 mm for the subsequent ones (CI, C1, C2).

13. Device for the implementation of the process according to one of Claims 1 to 12, wherein it comprises four or five successive crushers (B1, B2, CI, C1, C2) each followed by a sieving system (T1 to T5) having only three levels of particle size for the first two crushers (B1, B2), only two levels for the third crusher (CI) and a single level for the subsequent crusher or crushers (C1, C2) respectively.

14. Device according to Claim 13, wherein the sieving system (T1, T2) of the first (B1) and second crusher (B2) is shared.

15. Device according to one of Claims 13 and 14, wherein it comprises only four crushers (B1, B2, CI, C1-C2) each followed by a sieving system (T1 to T5), some of which can be shared, the fourth crusher (C1) and the fourth sieving system (T4) being arranged to ensure the role of a fifth crusher (C2) and of a fifth sieving system (T5) respectively.

16. Device according to one of Claims 13 to 15, wherein the crushers (B1, B2, CI, C1, C2) are each provided with two rollers, whereas the rollers of the first two crushers (B1, B2) are grooved and of the back-to-back type and those of the two or three other crushers (CI, C1, C2) are smooth.
